# FASCICULE DE BREVET EUROPEEN

(11) **EP 2 407 070 B1**
(45) Date de publication et mention de la délivrance du brevet: **06.08.2014**
(21) Numéro de dépôt: 11305913.3
(22) Date de dépôt: 13.07.2011
(51) Int. Cl.: A47J 36/20, A47J 36/24, A47J 45/06

(54) **Element de cuisson, notamment pour appareil electrique de cuisson**
Kochelement, insbesondere für Elektrokochgerät
Cooking apparatus, in particular for an electric cooking appliance

(30) Priorité: 16.07.2010 FR 1055810
(43) Date de publication de la demande: 18.01.2012
(73) Titulaire: Seb S.A., 69130 Ecully (FR)
(72) Inventeur: Charles, Patrick, 65290 LOUEY (FR); Dominguez, Augustin, 65000 TARBES (FR); Astegno, Jean-Paul, 64420 ESPOEY (FR); Lacourpaille, Gérard, 65380 OSSUN (FR)
(74) Mandataire: Cémeli, Eric Philippe Laurent

(56) Documents cités:
- DE-U1- 7 930 626
- US-A- 3 981 044
- US-A1- 2007 000 394

## Description

La présente invention concerne le domaine technique des éléments de cuisson utilisés pour la cuisson à la vapeur.

La présente invention concerne notamment les couvercles et les supports de cuisson disposés sur une base chauffante appartenant à un appareil électrique de cuisson, ainsi que les couvercles et les supports de cuisson disposés sur un article culinaire tel qu'une casserole ou une poêle.

La présente invention concerne également les appareils électriques de cuisson ainsi que les ensembles d'articles culinaires comportant un élément de cuisson du type précité.

Les couvercles utilisés pour la cuisson d'aliments comportent usuellement un organe de préhension agencé en position centrale. L'utilisateur est habitué à soulever le couvercle de manière à ce que la vapeur s'échappe à distance du bras tenant l'organe de préhension du couvercle.

La disposition précitée présente l'inconvénient de ne pas être applicable à un élement de cuisson intermédiaire, disposé par exemple en dessous d'un couvercle. Une poignée latérale unique s'étendant radialement peut alors être envisagée. Cette disposition présente toutefois l'inconvénient d'être encombrante. Cette disposition présente également l'inconvénient d'être peu adaptée à un élément de cuisson de grande taille et/ou présentant un poids important.

Pour limiter l'encombrement de l'élément de cuisson, l'utilisation d'un ou plusieurs organes de support, prévus pour être simplement soulevés par l'utilisateur, peut être envisagée. Cependant les mains ou les doigts de l'utilisateur peuvent être alors beaucoup plus proches de la paroi latérale dudit élément de cuisson, et être atteints par un dégagement de vapeur intervenant lorsque l'utilisateur soulève ledit élément de cuisson.

Un élément de cuisson selon le préambule de la revendication 1 est connu du document DE 79 30 626 U.

Un objet de la présente invention est de proposer un élément de cuisson comportant un organe de support susceptible d'être soulevé par l'utilisateur, avec lequel les risques liés aux dégagements de vapeur sont limités.

Un objet additionnel de la présente invention est de proposer un élément de cuisson comportant un organe de support susceptible d'être soulevé par l'utilisateur, dont l'encombrement soit limité.

Un objet additionnel de la présente invention est de proposer un élément de cuisson susceptible d'être soulevé à deux mains, avec lequel les risques liés aux dégagements de vapeur sont limités.

Un autre objet de la présente invention est de proposer un appareil électrique de cuisson comprenant un élément de cuisson comportant un organe de support susceptible d'être soulevé par l'utilisateur, avec lequel les risques liés aux dégagements de vapeur sont limités.

Un objet additionnel de la présente invention est de proposer un appareil électrique de cuisson comprenant un élément de cuisson comportant un organe de support susceptible d'être soulevé par l'utilisateur, dont l'encombrement soit limité.

Un objet additionnel de la présente invention est de proposer un appareil électrique de cuisson comprenant un élément de cuisson susceptible d'être soulevé à deux mains, avec lequel les risques liés aux dégagements de vapeur sont limités.

Ces objets sont atteints avec un élément de cuisson comportant un corps tubulaire et au moins un organe de support prévu pour être soulevé par un utilisateur, le ou les organe(s) de support étant agencé(s) latéralement à l'extérieur du corps tubulaire, dans lequel au moins un organe pare-vapeur s'étend à l'extérieur du corps tubulaire sous le ou au moins l'un des organe(s) de support, du fait que le ou au moins un des organe(s) pare-vapeur présente une face inférieure relevée vers une extrémité latérale. Lorsque le corps tubulaire contient de la vapeur, ces dispositions permettent de protéger les doigts de l'utilisateur soulevant le ou l'un des organe(s) de support d'un dégagement de vapeur.L'évacuation latérale de la vapeur est favorisée.

Avantageusement alors, la face inférieure dudit ou d'au moins un desdits organe(s) pare-vapeur est relevée vers une autre extrémité latérale. Cette disposition permet d'améliorer l'évacuation latérale de la vapeur.

Selon une forme de réalisation avantageuse, le ou au moins l'un des organe(s) de support présente des extrémités latérales reliées à ledit ou au moins l'un desdits organe(s) pare-vapeur. Cette disposition permet que la vapeur contourne latéralement le ou au moins l'un des organe(s) pare-vapeur. En alternative, le ou au moins l'un des organe(s) de support pourrait s'étendre à distance de cet organe pare-vapeur, entièrement au dessus de cet organe pare-vapeur.

Selon une forme de réalisation avantageuse, le ou au moins l'un des organe(s) de support est issu du corps tubulaire. En alternative, le ou au moins l'un des organe(s) de support pourrait notamment être issu de l'organe pare-vapeur ou de l'un des organes pare-vapeur.

Selon une forme de réalisation avantageuse, le ou au moins l'un des organe(s) pare-vapeur est issu du corps tubulaire. En alternative, le ou au moins l'un des organe(s) pare-vapeur pourrait notamment être issu de l'organe de support ou de l'un des organes de support.

Avantageusement encore, le ou au moins l'un des organe(s) de support, d'une part, et au moins un autre organe de support, d'autre part, sont agencés de part et d'autre du corps tubulaire, et au moins un autre organe pare-vapeur s'étend à l'extérieur du corps tubulaire sous le ou au moins l'un des autres organe(s) de support. L'utilisateur peut ainsi soulever l'élément de cuisson à deux mains placées de part et d'autre du corps tubulaire en limitant les risques liés aux dégagements de vapeur pour l'une et l'autre de ses mains.

Avantageusement alors, pour faciliter la saisie à deux mains de l'élément de cuisson, l'organe de support et l'autre organe de support sont identiques.

Avantageusement encore, l'organe pare-vapeur et l'autre organe pare-vapeur sont identiques.

Avantageusement encore, le corps tubulaire forme un support comportant au moins un orifice. Les aliments à cuire peuvent être placés directement sur le support, pour une cuisson à la vapeur. Les aliments peuvent être aussi placés dans un ou plusieurs récipients. Si désiré, ledit orifice peut être prévu pour recevoir un récipient.

Ces objets sont atteints aussi avec un appareil électrique de cuisson comprenant un élément de cuisson reposant sur une base chauffante comportant un dispositif de production de vapeur, l'élément de cuisson et la base chauffante formant une enceinte susceptible de contenir de la vapeur, dans lequel l'élément de cuisson est conforme à l'une au moins des caractéristiques précitées.

Avantageusement alors, l'appareil électrique de cuisson comprend un couvercle reposant sur l'élément de cuisson.

L'invention sera mieux comprise à l'étude d'un exemple de réalisation et de trois variantes, pris à titre nullement limitatif, illustrés dans les figures annexées, dans lesquelles :
- la figure 1 est une vue en perspective éclatée d'un exemple de réalisation d'un appareil électrique de cuisson comportant un élément de cuisson selon l'invention,
- la figure 2 est une vue en perspective sous un autre angle de l'élément de cuisson illustré sur la figure 1,
- la figure 3 est une vue d'un côté de l'élément de cuisson illustré sur les figures 1 et 2,
- la figure 4 est une vue d'un autre côté de l'élément de cuisson illustré sur les figures 1 à 3,
- la figure 5 est une première variante de réalisation de l'élément de cuisson illustré sur les figures 1 à 4,
- la figure 6 est une deuxième variante de réalisation de l'élément de cuisson illustré sur la figure 5,
- la figure 7 est une troisième variante de réalisation de l'élément de cuisson illustré sur les figures 1 à 4.

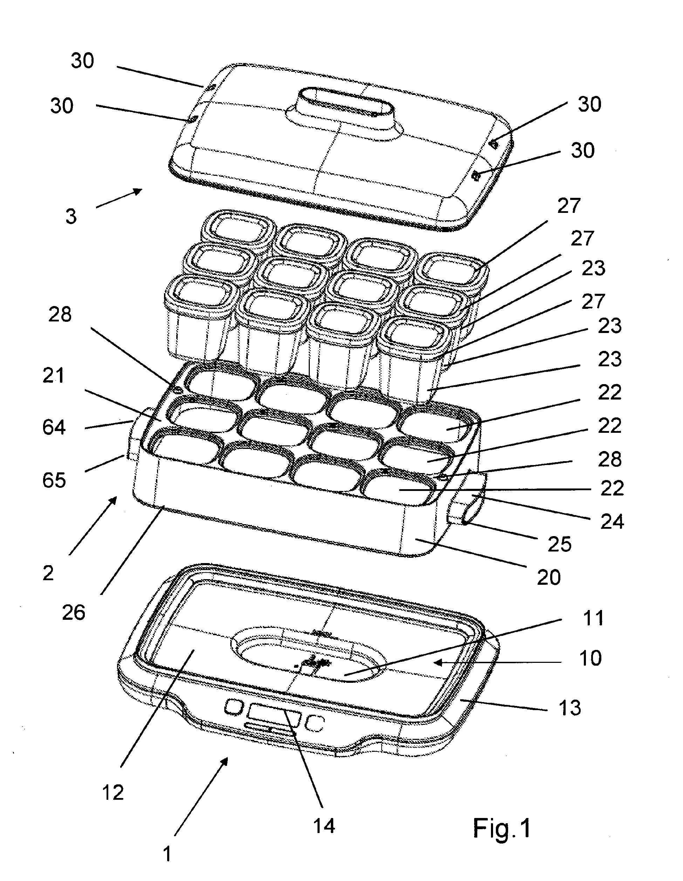

L'appareil électrique de cuisson illustré sur la figure 1 comprend une base chauffante 1, un élément de cuisson 2 reposant sur la base chauffante 1, et un couvercle 3 reposant sur l'élément de cuisson 2. L'élément de cuisson 2 est intercalé entre la base chauffante 1 et le couvercle 3.

La base chauffante 1 comporte un dispositif de production de vapeur 10 comprenant un réservoir d'eau 11 associé à des moyens de chauffe (non représentés sur les figures), aptes à transformer en vapeur l'eau contenue dans le réservoir d'eau 11. Le réservoir d'eau 11 est par exemple ménagé dans une plaque métallique 12 montée dans une embase 13. La plaque métallique 12 est par exemple réalisée en aluminium pour assurer une répartition homogène de la température sur toute la surface de la plaque métallique 12, et de préférence en aluminium moulé. Les moyens de chauffe sont disposés dans la partie centrale de la plaque métallique 12. Les moyens de chauffe sont par exemple formés par un élément chauffant blindé, fixé sous la plaque métallique 12 par exemple au niveau de la périphérie du réservoir d'eau 11. L'embase 13 comprend en outre un panneau de commande 14 et l'électronique associée pour piloter les moyens de chauffe.

L'élément de cuisson 2 comporte un corps tubulaire 20 prévu pour reposer sur la base chauffante 1. Le corps tubulaire 20 forme un support 21 comportant au moins un orifice 22 prévu pour recevoir un récipient 23. Tel que représenté sur la figure 1, le support 21 comporte douze orifices 22 recevant douze récipients 23. Si désiré, des capuchons 27 peuvent fermer les récipients 23. Le corps tubulaire 20 présente une bordure inférieure 26.

Les récipients 23 en place sur le support 21 sont suspendus au dessus de la base chauffante 1 lorsque la bordure inférieure 26 du corps tubulaire 20 repose sur la base chauffante 1.

Si désiré, l'élément de cuisson 2 et/ou le couvercle 3 peuvent comporter un ou plusieurs orifices d'échappement de vapeur 28 ; 30.

L'élément de cuisson 2 comporte un organe de support 24 prévu pour être soulevé par un utilisateur. L'organe de support 24 est agencé latéralement à l'extérieur du corps tubulaire 20. Plus particulièrement, l'organe de support 24 est issu du corps tubulaire 20. L'organe de support 24 est de préférence réalisé en matériau peu conducteur de chaleur, par exemple en matériau plastique. Si désiré, l'élément de cuisson 2 peut être réalisé en une seule pièce.

Un organe pare-vapeur 25 s'étend à l'extérieur du corps tubulaire 20 sous l'organe de support 24. La distance entre l'organe pare-vapeur 25 et l'organe de support 24 permet à l'utilisateur de passer ses doigts sous l'organe de support 24 pour pouvoir soulever l'élément de cuisson 2. L'organe pare-vapeur 25 s'étend en périphérie de la bordure inférieure 26 du corps tubulaire 20. En d'autres termes, l'organe pare-vapeur 25 est proéminent par rapport à la bordure inférieure 26.

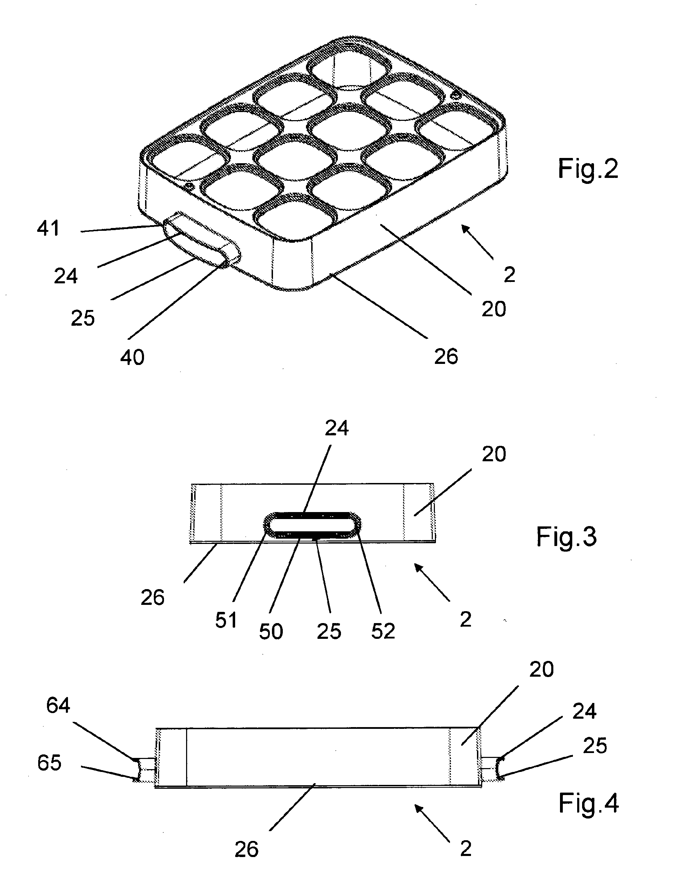

Plus particulièrement, tel que mieux visible sur la figure 2, l'organe pare-vapeur 25 est issu du corps tubulaire 20. L'organe pare-vapeur 25 s'étend latéralement à l'extérieur du corps tubulaire 20 sous l'organe de support 24. L'organe de support 24 présente deux extrémités latérales 40, 41 reliées à l'organe pare-vapeur 25. L'organe pare-vapeur 25 présente une face inférieure 50 relevée vers une extrémité latérale 51 dudit organe pare-vapeur 25. La face inférieure 50 de l'organe pare-vapeur 25 est relevée vers une autre extrémité latérale 52 de l'organe pare-vapeur 25.

Tel que visible sur les figures 1 et 4, l'élément de cuisson 2 comporte un autre organe de support 64 prévu pour être soulevé par un utilisateur. L'autre organe de support 64 est agencé latéralement à l'extérieur du corps tubulaire 20. L'organe de support 24 et l'autre organe de support 64 sont agencés de part et d'autre du corps tubulaire 20, pour permettre de soulever l'élément de cuisson 2 en utilisant les deux mains. Un autre organe pare-vapeur 65 s'étend à l'extérieur du corps tubulaire 20 sous l'autre organe de support 64.

L'organe de support 24 et l'autre organe de support 64 sont avantageusement identiques. L'organe pare-vapeur 25 et l'autre organe pare-vapeur 65 sont avantageusement identiques.

L'appareil selon l'invention s'utilise et fonctionne de la manière suivante.

L'utilisateur verse la quantité d'eau désirée dans le réservoir d'eau 11, dispose l'élément de cuisson 2 portant les récipients 23 sur la base chauffante 1. L'utilisateur met en marche l'appareil pour cuire le contenu des récipients en évaporant l'eau contenue dans le réservoir d'eau 11. L'élément de cuisson 2 et la base chauffante 1 forment ainsi une enceinte susceptible de contenir de la vapeur.

Lorsque l'utilisateur soulève l'élément de cuisson 2 en utilisant l'organe de support 24 et/ou l'autre organe de support 64, l'organe pare-vapeur 25 et l'autre organe pare-vapeur 65 permettent de protéger les doigts de l'utilisateur de la vapeur s'échappant de l'enceinte formée par la base chauffante 1 et l'élément de cuisson 2.

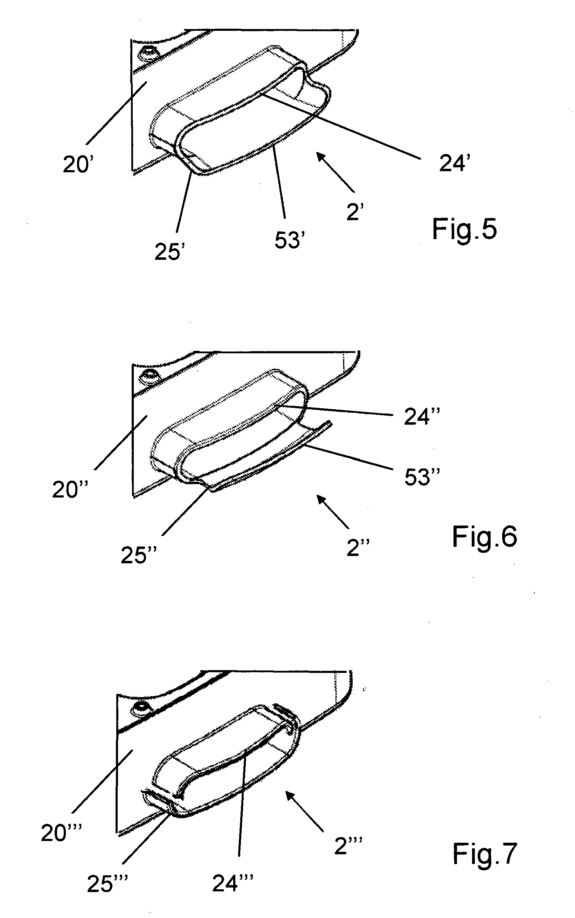

La variante de réalisation illustrée sur la figure 5 diffère de l'exemple de réalisation illustré sur les figures 1 à 4 en ce que l'organe pare-vapeur 25' issu du corps tubulaire 20' de l'élément de cuisson 2' présente une bordure latérale 53' s'étendant au-delà de l'organe de support 24'.

La variante de réalisation illustrée sur la figure 6 diffère de l'exemple de réalisation illustré sur la figure 5 en ce que l'organe pare-vapeur 25" issu du corps tubulaire 20" de l'élément de cuisson 2" présente une bordure latérale 53" relevée au-delà de l'organe de support 24".

La variante de réalisation illustrée sur la figure 7 diffère de l'exemple de réalisation illustré sur les figures 1 à 4 en ce que l'élément de cuisson 2'" comporte un organe de support 24"' et un organe pare-vapeur 25"' disjoints. En d'autres termes l'organe de support 24"' et l'organe pare-vapeur 25"' sont formés par au moins deux protubérances séparées issues du corps tubulaire 20"' de l'élément de cuisson 2"'.

Les éléments de cuisson 2' ; 2" ; 2'" peuvent comporter un autre organe de support et un autre organe pare-vapeur, avantageusement identiques à l'organe de support 24' ; 24" ; 24"' et à l'organe pare-vapeur 25' ; 25" ; 25"'.

De préférence, l'organe de support 24 ; 24' ; 24" ; 24"' et l'autre organe de support 64 s'étendent entièrement au dessus de l'organe pare-vapeur 25 ; 25' ; 25" ; 25"' ou de l'autre organe pare-vapeur 65.

A titre de variante, l'élément de cuisson 2, 2', 2", 2'" peut présenter un support 21 perforé prévu pour recevoir directement les aliments à cuire à la vapeur.

A titre de variante, l'organe de support 24 ; 24' ; 24" ; 24"' de l'élément de cuisson 2, 2', 2", 2'" n'appartient pas nécessairement à un appareil électrique de cuisson, mais peut être disposé sur un article culinaire tel qu'une poêle ou une casserole.

A titre de variante, l'élément de cuisson 2 ; 2' ; 2" ; 2'" peut comporter au moins un organe de support 24 ; 24' ; 24" ; 24"' et au moins un organe pare-vapeur 25 ; 25' ; 25" ; 25"' s'étendant à l'extérieur du corps tubulaire 20 ; 20' ; 20" ; 20"' sous le ou au moins l'un des organe(s) de support 24 ; 24' ; 24" ; 24"'. En d'autres termes, un organe pare-vapeur peut être agencé sous plusieurs organes de support, plusieurs organes pare-vapeur peuvent être agencés sous un même organe de support, plusieurs organes pare-vapeur peuvent être agencés sous plusieurs organes de support.

A titre de variante, le ou les organe(s) de support 24 ; 24' ; 24" ; 24"', d'une part, et au moins un autre organe de support 64, d'autre part, sont agencés de part et d'autre du corps tubulaire 20 ; 20' ; 20" ; 20"', et au moins un autre organe pare-vapeur 65 s'étend à l'extérieur du corps tubulaire 20 ; 20' ; 20" ; 20"' sous le ou au moins un des autres organe(s) de support 64. En d'autres termes, un autre organe pare-vapeur peut être agencé sous plusieurs autres organes de support, plusieurs autres organes pare-vapeur peuvent être agencés sous un même autre organe de support, plusieurs autres organes pare-vapeur peuvent être agencés sous plusieurs autres organes de support.

La présente invention n'est nullement limitée à l'exemple de réalisation décrit et à ses variantes, mais englobe de nombreuses modifications dans le cadre des revendications.

## Revendications

1. Elément de cuisson (2 ; 2' ; 2" ; 2"'), comportant un corps tubulaire (20 ; 20' ; 20" ; 20"') et au moins un organe de support (24 ; 24' ; 24" ; 24"') prévu pour être soulevé par un utilisateur, le ou les organe(s) de support (24 ; 24' ; 24" ; 24"') étant agencé(s) latéralement à l'extérieur du corps tubulaire (20 ; 20' ; 20" ; 20"'), au moins un organe pare-vapeur (25 ; 25' ; 25" ; 25"') s'étendant à l'extérieur du corps tubulaire (20 ; 20' ; 20" ; 20"') sous le ou au moins l'un des organe(s) de support (24 ; 24' ; 24" ; 24"'), **caractérisé en ce que** le ou au moins un des organe(s) pare-vapeur (25 ; 25' ; 25" ; 25"') présente une face inférieure (50) relevée vers une extrémité latérale (51).

2. Elément de cuisson (2 ; 2' ; 2" ; 2"') selon la revendication 1, **caractérisé en ce que** la face inférieure (50) dudit ou d'au moins un des organe(s) pare-vapeur (25 ; 25' ; 25" ; 25"') est/sont relevée(s) vers une autre extrémité latérale (52).

3. Elément de cuisson (2 ; 2' ; 2" ; 2"') selon l'une des revendications 1 ou 2, **caractérisé en ce que** le ou au moins l'un des organe(s) de support (24 ; 24' ; 24" ; 24"') présente deux extrémités latérales (40 ; 41) reliées à ledit ou au moins l'un desdits organe(s) pare-vapeur (25 ; 25' ; 25" ; 25"').

4. Elément de cuisson (2 ; 2' ; 2" ; 2"') selon l'une des revendications 1 à 3, **caractérisé en ce que** le ou au moins l'un des organe(s) de support (24 ; 24' ; 24" ; 24"') est issu du corps tubulaire (20 ; 20' ; 20" ; 20"').

5. Elément de cuisson (2 ; 2' ; 2" ; 2"') selon l'une des revendications 1 à 4, **caractérisé en ce que** le ou au moins l'un des organe(s) pare-vapeur (25 ; 25' ; 25" ; 25"') est issu du corps tubulaire (20 ; 20' ; 20" ; 20"').

6. Elément de cuisson (2 ; 2' ; 2" ; 2"') selon l'une des revendications 1 à 5, **caractérisé en ce que** le ou au moins l'un des organe(s) de support (24 ; 24' ; 24" ; 24"') et au moins un autre organe de support (64) sont agencés de part et d'autre du corps tubulaire (20 ; 20' ; 20" ; 20"', et **en ce qu'**au moins un autre organe pare-vapeur (65) s'étend à l'extérieur du corps tubulaire (20 ; 20' ; 20" ; 20"') sous le ou au moins l'un des autres organe(s) de support (64).

7. Elément de cuisson (2 ; 2' ; 2" ; 2"') selon l'une des revendications 1 à 6, **caractérisé en ce que** le corps tubulaire (20 ; 20' ; 20" ; 20"') forme un support (21) comportant au moins un orifice (22).

8. Elément de cuisson (2 ; 2' ; 2" ; 2"') selon l'une des revendications 1 à 7, **caractérisé en ce qu'**il est réalisé en une seule pièce.

9. Appareil électrique de cuisson comprenant un élément de cuisson (2 ; 2' ; 2" ; 2"') reposant sur une base chauffante (1) comportant un dispositif de production de vapeur (10), l'élément de cuisson (2 ; 2' ; 2" ; 2"') et la base chauffante (1) formant une enceinte susceptible de contenir de la vapeur, **caractérisé en ce que** l'élément de cuisson (2 ; 2' ; 2" ; 2"') est conforme à l'une des revendications 1 à 8.

10. Appareil électrique de cuisson selon la revendication 9, **caractérisé en ce qu'**il comporte un couvercle (3) reposant sur l'élément de cuisson (2 ; 2' ; 2" ; 2'"').

## Patentansprüche

1. Kocheinsatz (2; 2'; 2"; 2"') mit einem rohrförmigen Körper (20; 20'; 20"; 20"') und mindestens einem Stützteil (24; 24'; 24"; 24"'), das zum Anheben durch den Benutzer vorgesehen ist, wobei das Stützteil bzw. die Stützteile (24; 24'; 24"; 24"') seitlich an der Außenseite des rohrförmigen Körpers (20; 20'; 20"; 20"') angeordnet ist bzw. sind und sich mindestens ein Dampfsperrelement (25; 25'; 25"; 25"') entlang der Außenseite des rohrförmigen Körpers (20; 20'; 20"; 20"') unter dem Stützteil bzw. unter mindestens einem der Stützteile (24; 24'; 24"; 24"') erstreckt, **dadurch gekennzeichnet, dass** das Dampfsperrelement bzw. mindestens eines der Dampfsperrelemente (25; 25'; 25"; 25"') eine Unterseite (50) aufweist, die in Richtung eines seitlichen Endes (51) erhöht ist.

2. Kocheinsatz (2; 2'; 2"; 2"') nach Anspruch 1, **dadurch gekennzeichnet, dass** die Unterseite (50) des genannten Dampfsperrelements oder mindestens eines der Dampfsperrelemente (25; 25'; 25"; 25"') in Richtung eines anderen seitlichen Endes (52) erhöht ist.

3. Kocheinsatz (2; 2'; 2"; 2"') nach einem der Ansprüche 1 oder 2, **dadurch gekennzeichnet, dass** das Stützteil bzw. mindestens eines der Stützteile (24; 24'; 24"; 24"') zwei seitliche Enden (40; 41) aufweist, die mit dem genannten Dampfsperrelement bzw. mit mindestens einem der Dampfsperrelemente (25; 25'; 25"; 25"') verbunden sind.

4. Kocheinsatz (2; 2'; 2"; 2"') nach einem der Ansprüche 1 bis 3, **dadurch gekennzeichnet, dass** das Stützteil bzw. mindestens eines der Stützteile (24; 24'; 24"; 24"') aus dem rohrförmigen Körper (20; 20'; 20"; 20"') hervorgeht.

5. Kocheinsatz (2; 2'; 2"; 2"') nach einem der Ansprüche 1 bis 4, **dadurch gekennzeichnet, dass** das Dampfsperrelement bzw. mindestens eines der Dampfsperrelemente (25; 25'; 25"; 25"') aus dem rohrförmigen Körper (20; 20'; 20"; 20"') hervorgeht.

6. Kocheinsatz (2; 2'; 2"; 2"') nach einem der Ansprüche 1 bis 5, **dadurch gekennzeichnet, dass** das Stützteil bzw. mindestens eines der Stützteile (24; 24'; 24"; 24"') und mindestens ein weiteres Stützteil (64) auf beiden Seiten des rohrförmigen Körpers (20; 20'; 20"; 20"') angeordnet sind, und dass sich mindestens ein weiteres Dampfsperrelement (65) entlang der Außenseite des rohrförmigen Körpers (20; 20'; 20"; 20"') unter dem weiteren Stützteil bzw. unter mindestens einem der weiteren Stützteile (64) erstreckt.

7. Kocheinsatz (2; 2'; 2"; 2"') nach einem der Ansprüche 1 bis 6, **dadurch gekennzeichnet, dass** der rohrförmige Körper (20; 20'; 20"; 20"') einen Träger (21) mit mindestens einer Öffnung (22) bildet.

8. Kocheinsatz (2; 2'; 2"; 2"') nach einem der Ansprüche 1 bis 7, **dadurch gekennzeichnet, dass** er einstückig gefertigt ist.

9. Elektrisches Kochgerät mit einem Kocheinsatz (2; 2'; 2"; 2"'), der auf einem Heizsockel (1) ruht, wobei das Gerät eine Vorrichtung zur Dampferzeugung (10), den Kocheinsatz (2; 2'; 2"; 2"') und den Heizsockel (1) umfasst und einen abgeschlossenen Raum für die Dampfaufnahme bildet, **dadurch gekennzeichnet, dass** der Kocheinsatz (2; 2'; 2"; 2"') einem der Ansprüche 1 bis 8 entspricht.

10. Elektrisches Kochgerät nach Anspruch 9, **dadurch gekennzeichnet, dass** es einen Deckel (3) umfasst, der auf dem Kocheinsatz (2; 2'; 2"; 2"') aufliegt.

## Claims

1. Cooking element (2; 2'; 2"; 2"'), comprising a tubular body (20; 20'; 20"; 20"') and at least one support member (24; 24'; 24"; 24"') adapted to be lifted by a user, the support member(s) (24; 24'; 24"; 24"') being arranged laterally outside the tubular body (20; 20'; 20"; 20"'), at least one steam barrier member (25; 25'; 25"; 25"') extending outside the tubular body (20; 20'; 20"; 20"') under the or at least one of the support member(s) (24; 24'; 24"; 24"'), **characterised in that** the or at least one of the steam barrier members (25; 25'; 25"; 25"') has a lower side (50) raised towards a lateral end (51).

2. Cooking element (2; 2'; 2"; 2"') according to claim 1, **characterised in that** the lower side (50) of said or at least one of the steam barrier member(s) (25; 25'; 25"; 25"') is/are raised towards another lateral end (52).

3. Cooking element (2; 2'; 2"; 2"') according to claim 1 or 2, **characterised in that** the or at least one of the support member(s) (24; 24'; 24"; 24"') has two lateral ends (40; 41) connected to said or at least one of said steam barrier member(s) (25; 25'; 25"; 25"').

4. Cooking element (2; 2'; 2"; 2"') according to one of claims 1 to 3, **characterised in that** the or at least one of the support member(s) (24; 24'; 24"; 24"') comes from the tubular body (20; 20'; 20"; 20"').

5. Cooking element (2; 2'; 2"; 2"') according to one of claims 1 to 4, **characterised in that** the or at least one of the steam barrier member(s) (25; 25'; 25"; 25"') comes from the tubular body (20; 20'; 20"; 20"').

6. Cooking element (2; 2'; 2"; 2"') according to one of claims 1 to 5, **characterised in that** the or at least one of the support member(s) (24; 24'; 24"; 24"') and at least one other support member (64) are arranged each side of the tubular body (20; 20'; 20"; 20"'), and **in that** at least one other steam barrier member (65) extends outside the tubular body (20; 20'; 20"; 20"') under the or at least one of the other support member(s) (64).

7. Cooking element (2; 2'; 2"; 2"') according to one of claims 1 to 6, **characterised in that** the tubular body (20; 20'; 20"; 20"') forms a support (21) having at least one orifice (22).

8. Cooking element (2; 2'; 2"; 2"') according to one of claims 1 to 7, **characterised in that** it is made in one piece.

9. Electrical cooking appliance comprising a cooking element (2; 2'; 2"; 2"') resting on a heating base (1) having a steam generating device (10), the cooking element (2; 2'; 2"; 2"') and the heating base (1) forming a chamber capable of containing steam, **characterised in that** the cooking element (2; 2'; 2"; 2"') is conform with one of claims 1 to 8.

10. Electrical cooking appliance according to claim 9, **characterised in that** it comprises a lid (3) resting on the cooking element (2; 2'; 2"; 2"').
